(19) Europäisches Patentamt
European Patent Office
Office européen des brevets

(11) EP 0 880 319 B1

# (12) EUROPÄISCHE PATENTSCHRIFT

(45) Veröffentlichungstag und Bekanntmachung des Hinweises auf die Patenterteilung:
**05.01.2000 Patentblatt 2000/01**

(21) Anmeldenummer: **96931770.0**

(22) Anmeldetag: **04.09.1996**

(51) Int. Cl.⁷: **A01N 43/653**
// (A01N43/653, 37:34)

(86) Internationale Anmeldenummer:
**PCT/EP96/03887**

(87) Internationale Veröffentlichungsnummer:
**WO 97/09880 (20.03.1997 Gazette 1997/13)**

## (54) FUNGIZIDE MISCHUNGEN
FUNGICIDE MIXTURES
MELANGES FONGICIDES

(84) Benannte Vertragsstaaten:
**AT BE CH DE DK ES FR GB GR IE IT LI NL PT SE**

(30) Priorität: **13.09.1995 DE 19533796**

(43) Veröffentlichungstag der Anmeldung:
**02.12.1998 Patentblatt 1998/49**

(73) Patentinhaber:
**BASF AKTIENGESELLSCHAFT**
**67056 Ludwigshafen (DE)**

(72) Erfinder:
- **REICHARDT, Michael**
  **D-67169 Kallstadt (DE)**
- **SAUR, Reinhold**
  **D-67459 Böhl-Iggelheim (DE)**
- **SCHELBERGER, Klaus**
  **D-67161 Gönnheim (DE)**
- **AMMERMANN, Eberhard**
  **D-64646 Heppenheim (DE)**
- **LORENZ, Gisela**
  **D-67434 Hambach (DE)**
- **STRATHMANN, Siegfried**
  **D-67117 Limburgerhof (DE)**

(56) Entgegenhaltungen:
**EP-A- 0 002 940**
**EP-A- 0 196 038**
**DE-A- 4 309 272**
**GB-A- 2 267 644**
**US-H- H1 400**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 880 319 B1

## Beschreibung

Die vorliegende Erfindung betrifft eine fungizide Mischung, welche

a) (2RS,3SR)-1-[3-(2-Chlorphenyl)-2,3-epoxy-2-(4-fluorphenyl)propyl]-1H-1,2,4-triazol

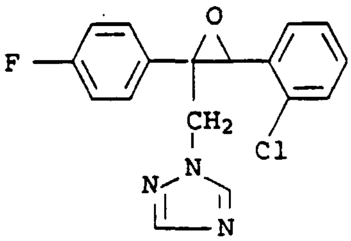

(I)

eines seiner Salze oder Addukte, und

b) Tetrachlorisophthalonitril II

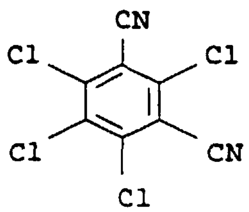

(II)

in einer synergistisch wirksamen Menge enthält.

Außerdem betrifft die Erfindung Verfahren zur Bekämpfung von Schadpilzen mit Mischungen der Verbindungen I und II und die Verwendung der Verbindung I und der Verbindung II zur Herstellung derartiger Mischungen.

Die Verbindung der Formel I, ihre Herstellung und ihre Wirkung gegen Schadpilze ist bekannt aus EP-A 196 038 und "The Pesticide Manual", 10th Edition, The British Crop Protection Council and The Royal Society of Chemistry, 1994 - im folgenden "Pesticide Manual" genannt - Seite 67: BAS 480 F, vorgeschlagener common name: Epoxiconazol). Ebenfalls bekannt ist die Verbindungen II (common name: Chlorothalonil), deren Herstellung und deren Wirkung gegen Schadpilze (vgl. "Pesticide Manual", Seite 193).

Im Hinblick auf eine Senkung der Aufwandmengen und eine Verbesserung des Wirkungsspektrums der bekannten Verbindungen I und II lagen der vorliegenden Erfindung Mischungen als Aufgabe zugrunde, die bei verringerter Gesamtmenge an ausgebrachten Wirkstoffen eine verbesserte Wirkung gegen Schadpilzen aufweisen (synergistische Mischungen).

Demgemäß wurde die eingangs definierte Mischung gefunden. Es wurde außerdem gefunden, daß sich bei gleichzeitiger, und zwar gemeinsamer oder getrennter Anwendung der Verbindung I und der Verbindung II oder bei Anwendung der Verbindung I und der verbindungen II nacheinander Schadpilze besser bekämpfen lassen, als mit den Einzelverbindungen allein.

Die Verbindung I ist wegen des basischen Charakters des 1,2,4-Triazolrings in der Lage, mit anorganischen oder organischen Säuren oder mit Metallionen Salze oder Addukte zu bilden.

Beispiele für anorganische Säuren sind Halogenwasserstoffsäuren wie Fluorwasserstoff, Chlorwasserstoff, Bromwasserstoff und Jodwasserstoff, ferner Kohlensäure, Schwefelsäure, Phosphorsäure und Salpetersäure.

Als organischen Säuren kommen beispielsweise in Betracht: Ameisensäure und Alkansäuren wie Essigsäure, Trifluoressigsäure, Trichloressigsäure und Propionsäure sowie Glycolsäure, Thiocyansäure, Milchsäure, Bernsteinsäure, Zitronensäure, Benzoesäure, Zimtsäure, Oxalsäure, Alkylsulfonsäuren (Sulfonsäuren mit geradkettigen oder verzweigten Alkylresten mit 1 bis 20 Kohlenstoffatomen), Arylsulfonsäuren oder -disulfonsäuren (aromatische Reste wie Phenyl und Naphthyl, welche eine oder zwei Sulfonsäuregruppen tragen), Alkylphosphonsäuren (Phosphonsäuren mit geradkettigen oder verzweigten Alkylresten mit 1 bis 20 Kohlenstoffatomen), Arylphosphonsäuren oder -diphosphonsäuren (aromatische Reste wie Phenyl und Naphthyl, welche eine oder zwei Phosphorsäurereste tragen), wobei die Alkyl- bzw. Arylreste weitere Substituenten tragen können, z.B. p-Toluolsulfonsäure, Salizylsäure, p-Aminosalizylsäure, 2-Phenoxybenzoesäure, 2-Acetoxybenzoesäure etc.

Als Metallionen kommen insbesondere die Ionen der Elemente der ersten bis achten Nebengruppe, vor allem Chrom, Mangan, Eisen, Kobalt, Nickel, Kupfer, Zink und daneben der zweiten Hauptgruppe, vor allem Calcium und Magnesium, der dritten und vierten Hauptgruppe, insbesondere Aluminium, Zinn und Blei in Betracht. Die Metalle können dabei gegebenenfalls in verschiedenen ihnen zukommenden Wertigkeiten vorliegen.

Bevorzugt setzt man bei der Bereitstellung der Mischungen die reinen Wirkstoffe I und II ein, denen man weitere Wirkstoffe gegen Schadpilze oder gegen andere Schädlinge wie Insekten, Spinntiere oder Nematoden oder auch herbizide oder wachstumsregulierende Wirkstoffe oder Düngemittel beimischen kann.

Die Mischungen aus den Verbindungen I und II bzw. die Verbindungen I und II gleichzeitig, gemeinsam oder getrennt angewandt, zeichnen sich durch eine hervorragende Wirkung gegen ein breites Spektrum von pflanzenpathogenen Pilzen, insbesondere aus der Klasse der Ascomyceten, Basidiomyceten, Phycomyceten und Deuteromyceten aus. Sie sind z.T. systemisch wirksam und können daher auch als Blatt- und Bodenfungizide eingesetzt werden.

Besondere Bedeutung haben sie für die Bekämpfung einer Vielzahl von Pilzen an verschiedenen Kulturpflanzen wie Baumwolle, Gemüsepflanzen (z.B. Gurken, Bohnen und Kürbisgewächse), Gerste, Gras, Hafer, Kaffee, Mais, Obstpflanzen, Reis, Roggen, Soja, Wein, Weizen, Zierpflanzen, Zuckerrohr sowie an einer Vielzahl von Samen.

Insbesondere eignen sie sich zur Bekämpfung der folgenden pflanzenpathogenen Pilze: Erysiphe graminis (echter Mehltau) an Getreide, Erysiphe cichoracearum und Sphaerotheca fuliginea an Kürbisgewächsen, Podosphaera leucotricha an Äpfeln, Uncinula necator an Reben, Puccinia-Arten an Getreide, Rhizoctonia-Arten an Baumwolle, Reis und Rasen, Ustilago-Arten an Getreide und Zukkerrohr, Venturia inaequalis (Schorf) an Äpfeln, Helminthosporium-Arten an Getreide, Septoria nodorum an Weizen, Botrytis cinera (Grauschimmel) an Erdbeeren und Reben, Cercospora arachidicola an Erdnüssen, Pseudocercosporella herpotrichoides an Weizen und Gerste, Pyricularia oryzae an Reis, Phytophthora infestans an Kartoffeln und Tomaten, Plasmopara viticola an Reben, Alternaria-Arten an Gemüse und Obst sowie Fusarjum- und Verticillium-Arten.

Sie sind außerdem im Materialschutz (z.B. Holzschutz) anwendbar, beispielsweise gegen Paecilomyces variotii.

Die Verbindungen I und II können gleichzeitig, und zwar gemeinsam oder getrennt, oder nacheinander aufgebracht werden, wobei die Reihenfolge bei getrennter Applikation im allgemeinen keine Auswirkung auf den Bekämpfungserfolg hat.

Die Verbindungen I und II werden üblicherweise in einem Gewichtsverhältnis von 10:1 bis 0,05:1, vorzugsweise 5:1 bis 0,1:1, insbesondere 3:1 bis 0,2:1 angewendet.

Die Aufwandmengen der erfindungsgemäßen Mischungen liegen, vor allem bei landwirtschaftlichen Kulturflächen, je nach Art des gewünschten Effekts bei 0,01 bis 3 kg/ha, vorzugsweise 0,1 bis 1,5 kg/ha, insbesondere 0,1 bis 1,0 kg/ha. Die Aufwandmengen liegen dabei für die Verbindungen I bei 0,01 bis 0,5 kg/ha, vorzugsweise 0,05 bis 0,5 kg/ha, insbesondere 0,05 bis 0,4 kg/ha. Die Aufwandmengen für die Verbindungen II liegen entsprechend bei 0,01 bis 2 kg/ha, vorzugsweise 0,05 bis 1 kg/ha, insbesondere 0,05 bis 0,5 kg/ha.

Bei der Saatgutbehandlung werden im allgemeinen Aufwandmengen an Mischung von 0,001 bis 50 g/kg Saatgut, vorzugsweise 0,01 bis 10 g/kg, insbesondere 0,01 bis 8 g/kg verwendet.

Sofern für Pflanzen pathogene Schadpilze zu bekämpfen sind, erfolgt die getrennte oder gemeinsame Applikation der Verbindungen I und II oder der Mischungen aus den Verbindungen I und II durch Besprühen oder Bestäuben der Samen, der Pflanzen oder der Böden vor oder nach der Aussaat der Pflanzen oder vor oder nach dem Auflaufen der Pflanzen.

Die erfindungegemäßen fungiziden synergistischen Mischungen bzw. die Verbindungen I und II können beispielsweise in Form von direkt versprühbaren Lösungen, Pulver und Suspensionen oder in Form von hochprozentigen wäßrigen, öligen oder sonstigen Suspensionen, Dispersionen, Emulsionen, Öldispersionen, Pasten, Stäulbemitteln, Streumitteln oder Granulaten aufbereitet und durch Versprühen, Vernebeln, Verstäuben, Verstreuen oder Gießen angewendet werden. Die Anwendungsform ist abhängig vom Verwendungszweck; sie soll in jedem Fall eine möglichst feine und gleichmäßige Verteilung der erfindungsgemäßen Mischung gewährleisten.

Die Formulierungen werden in an sich bekannter Weise hergestellt, z.B. durch Zugabe von Lösungsmitteln und/oder Trägerstoffen. Den Formulierungen werden Üblicherweise inerte Zusatzstoffe wie Emulgiermittel oder Dispergiermittel beigemischt.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether- und Fettalkoholsulfaten, sowie Salze sulfatierter Hexa-, Hepta- und Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol- oder Tributylphenylpolyglycolether, Alkylarylpoletheralkohole, Isotridecylalkohol, Fettalkoholethylenoxid- Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose in Betracht.

Pulver Streu- und Stäubemittel können durch Mischen oder gemeinsames Vermahlen der Verbindungen I oder II oder der Mischung aus den Verbindungen I und II mit einem festen Trägerstoff hergestellt werden.

Granulate (z.B. Umhüllungs-, Imprägnierungs- oder Homogengranulate) werden üblicherweise durch Bindung des Wirkstoffs oder der Wirkstoffe an einen festen Trägerstoff hergestellt.

Als Füllstoffe bzw. feste Trägerstoffe dienen beispielsweise Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, sowie Düngemittel wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Formulierungen enthalten im allgemeinen 0,1 bis 95 Gew.-%, vorzugsweise 0,5 bis 90 Gew.-% einer der Verbindungen I oder II bzw. der Mischung aus den Verbindungen I und II. Die Wirkstoffe werden dabei in einer Reinheit von 90 % bis 100 %, vorzugsweise 95 % bis 100 % (nach NMR- oder HPLC-Spektrum) eingesetzt.

Die Anwendung der Verbindungen I oder II, der Mischungen oder der entsprechenden Formulierungen erfolgt so, daß man die Schadpilze, deren Lebensraum oder die von ihnen freizuhaltenden Pflanzen, Samen, Böden, Flächen, Materialien oder Räume mit einer fungizid wirksamen Menge der Mischung, bzw. der Verbindungen I und II bei getrennter Ausbringung, behandelt.

Die Anwendung kann vor oder nach dem Befall durch die Schadpilze erfolgen.

Anwendungsbeispiel

Wirksamkeit gegen Botrytis cinerea

Die Wirkstoffe wurden getrennt oder gemeinsam als 10 %-ige Emulsion in einem Gemisch aus 70 Gew.-% Cyclohexanon, 20 Gew.-% Nekanil® LN (Lutensol® AP6, Netzmittel mit Emulgier- und Dispergierwirkung auf der Basis ethoxylierter Alkylphenole) und 10 Gew.-% Emulphor® EL (Emulan® EL, Emulgator auf der Basis ethoxylierter Fettalkohole) aufbereitet und entsprechend der gewünschten Konzentration mit Wasser verdünnt.

Paprikasämlinge der Sorte "Neusiedler Ideal Elite" wurden, nachdem sich 4 - 5 Blätter gut entwickelt hatten, mit wäßrigen Suspensionen, die 80 Gew.-% Wirkstoff und 20 Gew.-% Emulgiermittel in der Trockensubstanz enthielten, tropfnaß gespritzt. Nach dem Antrocknen des Spritzbelages wurden die Pflanzen mit einer Konidienaufschwemmung des Pilzes Botrytis cinerea besprüht und bei 22 - 24 °C in eine Kammer mit hoher Luftfeuchtigkeit gestellt. Nach 5 Tagen hatte sich die Krankheit auf den unbehandelten Kontrollpflanzen so stark entwickelt, daß die entstandenen Blattnekrosen den überwiegenden Teil der Blätter bedeckten.

Zur Auswertung wurden die visuell ermittelten Werte für den Prozentanteil befallener Blattfläche in (beobachtete) Wirkungsgrade als % der unbehandelten Kontrolle umgerechnet.

Die theoretisch zu erwartenden Wirkungsgrade der Wirkstoffmischungen wurden nach der Colby Formel [R.S. Colby, Weeds 15, 20-22 (1967)] ermittelt und mit den beobachteten Wirkungsgraden verglichen.

Colby Formel:

$$E = x + y - x \cdot y/100$$

E zu erwartender Wirkungsgrad, ausgedrückt in % der unbehandelten Kontrolle, beim Einsatz der Mischung zweier Wirkstoffe A und B in den Konzentrationen a und b

x der Wirkungsgrad, ausgedrückt in % der unbehandelten Kontrolle, beim Einsatz des Wirkstoffs A in der Konzentration a

y der Wirkungsgrad, ausgedrückt in % der unbehandelten Kontrolle, beim Einsatz des Wirkstoffs B in der Konzentration b Die Wirkungsgrad 0 ist gleicher Befall wie in der unbehandelten Kontrolle, Wirkungsgrad 100 ist 0 % Befall.

Versuchsergebnisse (Unbehandelte Kontrolle: 100% Befall)

| Wirkstoff | Wirkstoffkonzentration in der Spritzbrühe [ppm] | Wirkungsgrad in % der unbehandelten Kontrolle |
|---|---|---|
| I: Epoxiconazol | 6 | 50 |
| | 3 | 40 |
| | 1,5 | 10 |
| II: Chlorothalonil | 50 | 0 |
| | 12,5 | 0 |
| | 6 | 0 |
| | 3 | 0 |

| Mischungen aus I + II [Verhältnis] | beobachteter Wirkungsgrad | erwarteter Wirkungsgrad* |
|---|---|---|
| 6 + 6 [1 : 1] | 72 | 50 |
| 3 + 3 [1 : 1] | 70 | 40 |
| 6,25 + 50 [1 : 8] | 92 | 50 |
| 1,5 + 12,5 [1 : 8] | 70 | 10 |

*) berechnet nach der Colby-Formel

Aus den Ergebnissen des Versuches geht hervor, daß der beobachtete Wirkungsgrad in allen Mischungsverhältnissen höher ist, als der nach der Colby-Formel vorausberechnete Wirkungsgrad.

**Patentansprüche**

**1.** Fungizide Mischung, enthaltend

a) (2RS,3SR)-1-[3-(2-Chlorphenyl)-2,3-epoxy-2-(4-fluorphenyl)propyl]-1H-1,2,4-triazol

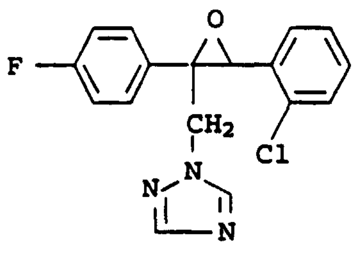

(I)

eines seiner Salze oder Addukte, und

b) Tetrachlorisophthalonitril II

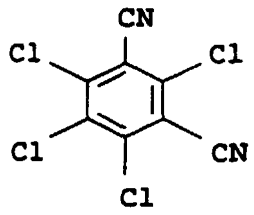

(II)

in einer synergistisch wirksamen Menge.

2. Fungizide Mischung nach Anspruch 1, dadurch gekennzeichnet, daß das Gewichtsverhältnis der Verbindung I, ihres Salzes oder Adduktes, zu der Verbindung II 10:1 bis 0,05:1 beträgt.

3. Verfahren zur Bekämpfung von Schadpilzen, dadurch gekennzeichnet, daß man die Schadpilze, deren Lebensraum oder die von ihnen freizuhaltenden Pflanzen, Samen, Böden, Flächen, Materialien oder Räume mit der Verbindung der Formel I, einem ihrer Salze oder Addukte gemäß Anspruch 1 und der Verbindung der Formel II gemäß Anspruch 1 behandelt.

4. Verfahren nach Anspruch 3, dadurch gekennzeichnet, daß man die Verbindung I, eines ihrer Salze oder Addukte gemäß Anspruch 1 und die Verbindung II gemäß Anspruch 1 gleichzeitig, und zwar gemeinsam oder getrennt, oder nacheinander ausbringt.

5. Verfahren nach Anspruch 3 oder 4, dadurch gekennzeichnet, daß man die Verbindung I, eines ihrer Salze oder Addukte gemäß Anspruch 1 in einer Menge von 0,01 bis 0,5 kg/ha aufwendet.

6. Verfahren nach den Ansprüchen 3 bis 5, dadurch gekennzeichnet, daß man die Verbindung II gemäß Anspruch 1 in einer Menge von 0,01 bis 2 kg/ha aufwendet.

7. Verwendung der Verbindung I, eines ihrer Salze oder Addukte gemäß Anspruch 1 zur Herstellung einer fungizid wirksamen synergistischen Mischung gemäß Anspruch 1.

8. Verwendung der Verbindung II gemäß Anspruch 1 zur Herstellung einer fungizid wirksamen synergistischen Mischung gemäß Anspruch 1.

## Claims

1. A fungicidal mixture comprising

a) (2RS,3SR)-1-[3-(2-chlorophenyl)-2,3-epoxy-2-(4-fluorophenyl)-propyl]-1H-1,2,4-triazole

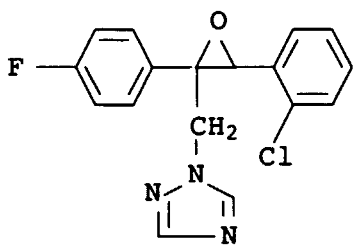

(I)

or a salt or adduct thereof, and

b) tetrachloroisophthalonitrile II

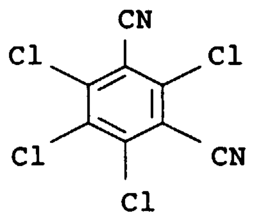

(II)

in a synergistically active amount.

2. A fungicidal mixture as claimed in claim 1, wherein the weight ratio of the compound I or a salt or adduct thereof to the compound II is 10:1 to 0.05:1.

3. A method of controlling harmful fungi, which comprises treating the harmful fungi, their environment, or the plants, seeds, soils, areas, materials or spaces to be kept free from them, with the compound of the formula I or a salt or adduct thereof as set forth in claim 1 and the compound of the formula II as set forth in claim 1.

4. A method as claimed in claim 3, wherein the compound I or a salt or adduct thereof as set forth in claim 1 and the compound II as set forth in claim 1 are applied simultaneously together or separately or in succession.

5. A method as claimed in claim 3 or 4, wherein the compound I or a salt or adduct thereof as set forth in claim 1 is applied in an amount of 0.01 to 0.5 kg/ha.

6. A method as claimed in claims 3 to 5, wherein 0.01 to 2 kg/ha of the compound II as set forth in claim 1 are applied.

7. The use of the compound I or a salt or adduct thereof as set forth in claim 1 for the preparation of a fungicidally active synergistic mixture as claimed in claim 1.

8. The use of the compound II as set forth in claim I for the preparation of a fungicidally active synergistic mixture as claimed in claim 1.

**Revendications**

1. Mélange fongicide contenant

a) du (2RS,3SR)-1-[3-(2-chlorophényl)-2,3-époxy-2-(4-fluorophényl)propyl]-1H-1,2,4-triazole

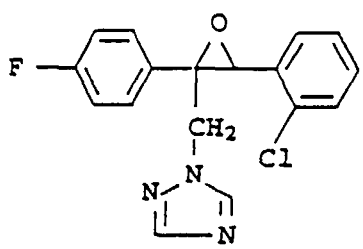

(I)

un de ses sels ou produits d'addition, et
b) du tétrachloroisophtalonitrile II

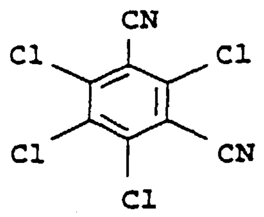

(II)

en une quantité efficace du point de vue synergique.

2. Mélange fongicide selon la revendication 1, caractérisé en ce que la proportion pondérale du composé I, de son sel ou de son produit d'addition, par rapport au composé II, est de 10:1 à 0,05:1.

3. Procédé pour lutter contre les champignons parasites, caractérisé par le fait qu'on traite les champignons parasites, leurs biotopes ou les plantes, semences, sols, surfaces, matériaux ou espaces qui doivent en être exempts avec le composé de formule I, l'un de ses sels ou l'un de ses produits d'addition selon la revendication 1 et le composé de formule II selon la revendication 1.

4. Procédé selon la revendication 3, caractérisé par le fait qu'on applique le composé I, l'un de ses sels ou l'un des ses produits d'addition selon la revendication 1 et le composé II selon la revendication 1 simultanément, c'est-à-dire ensemble ou séparément, ou l'un après l'autre.

5. Procédé selon la revendication 3 ou 4, caractérisé par le fait qu'on applique le composé I, l'un de ses sels ou l'un des ses produits d'addition selon la revendication 1 en une quantité de 0,01 à 0,5 kg/ha.

6. Procédé selon les revendication 3 à 5, caractérisé par le fait qu'on applique le composé II selon la revendication 1 en une quantité de 0,01 à 2 kg/ha.

7. Utilisation du composé 1, de l'un de ses sels ou de l'un de ses produits d'addition selon la revendication 1 pour la préparation d'un mélange synergique à activité fongicide selon la revendication 1.

8. Utilisation du composé II selon la revendication 1 pour la préparation d'un mélange synergique à activité fongicide selon la revendication 1.